# EUROPÄISCHE PATENTSCHRIFT

(11) **EP 1 239 684 B1**
(45) Veröffentlichungstag und Bekanntmachung des Hinweises auf die Patenterteilung: **05.10.2011**
(21) Anmeldenummer: 02100174.8
(22) Anmeldetag: 22.02.2002
(51) Int. Cl.: H04Q 3/62

(54) **Vorrichtung und Verfahren zum Vermitteln von ankommenden Anrufen an Teilnehmer eines Telekommunikationsnetzes**
Apparatus and Method for switching incoming calls to telecommunication network subscribers
Dispositif et méthode pour commuter des appels entrants vers des abonnées d'un réseau de télécommunication

(30) Priorität: 09.03.2001 DE 10111495
(43) Veröffentlichungstag der Anmeldung: 11.09.2002
(73) Patentinhaber: Siemens Enterprise Communications GmbH & Co. KG, 81379 München (DE)
(72) Erfinder: Aberer, Bernd, 81241, München (DE); Pesty, Francois, 82049, Pullach (DE); Ratzberger, Dietmar, 4431, Haidershof (AT)
(74) Vertreter: Fritzsche, Thomas

(56) Entgegenhaltungen:
- US-A1- 5 119 415
- US-A1- 6 076 093
- US-B1- 6 175 616

## Beschreibung

Die vorliegende Erfindung betrifft einen Vermittlungsplatz für eine Telekommunikationsanlage zum Vermitteln von ankommenden Anrufen an Teilnehmer eines Telekommunikationsnetzes und ein Verfahren zum Vermitteln von ankommende Anrufen an Teilnehmer eines Telekommunikationsnetzes.

Das US Patent US 5 119 415 beschreibt ein Verfahren zum Anzeige von Information eines gerufenen Teilnehmers auf einem Anrufterminal. Hierbei sieht das Verfahren vor, dass eine Status-Information des gerufenen Teilnehmers direkt zum Anrufer geschickt wird.

Das US Patent US 6 175 616 B1 beschreibt ein Verfahren und eine Vorrichtung um einen Telefonzustand über ein Netzwerk zu erhalten. Hierbei wird der Status eines gerufenen Teilnehmers überwacht, um die Wahrscheinlichkeit eines anrufenden Teilnehmers zu maximieren, den gerufenen Teilnehmer zu erreichen. Es ist hierzu vorgesehen, eine periodische Abfrage des Teilnehmerstatus durchzuführen und in einer Datei abzulesen.

Über einen Vermittlungsplatz einer Telekommunikationsanlage, beispielsweise in einem privaten Telekommunikationsnetz eines Unternehmens, hat ein externer Anrufer die Möglichkeit, sich zu seinem gewünschten Gesprächspartner - im folgenden als gewünschter Teilnehmer bezeichnet - durch eine Vermittlungsperson weitervermitteln zu lassen.

Beim Stand der Technik hat die Vermittlungsperson zum einen die Möglichkeit, den Anrufer in eine Warteschleife zu legen.

Die Vermittlungsperson ruft daraufhin den gewünschten Teilnehmer an, um festzustellen, ob beispielsweise der Anschluss des gewünschten Teilnehmers frei oder belegt ist, oder ob der gewünschte Teilnehmer seinen Anschluss auf einen Anrufbeantworter umgeleitet hat. Erst nach dieser Rückfrage wird der Anrufer an den gewünschten Teilnehmer vermittelt, wenn der Anschluss des gewünschten Teilnehmers frei ist.

Der Nachteil dieses Verfahrens ist jedoch, dass wertvolle Zeit für den Anrufer verloren geht, da der Anrufer beispielsweise die Kosten für die Zeit, die er in der Warteschleife verbringt, tragen muss. Weiterhin geht auch Zeit für die Vermittlungsperson am Vermittlungsplatz verloren, da sie in dieser Zeit keine weiteren Anrufe vermitteln kann. Außerdem muss die Vermittlungsperson viele Eingaben tätigen, damit bei Anrufzuständen "Belegt" oder "Anrufumleitung" die richtige Vermittlung erfolgt.

Zum anderen hat die Vermittlungsperson am Vermittlungsplatz die Möglichkeit, eine sogenannte Schnellvermittlung durchzuführen. Dabei wird der ankommende Anruf ohne Rückfrage auf den Anschluß des gewünschten Teilnehmers weitervermittelt. Diese Art der Vermittlung ist zwar schneller gegenüber der Vermittlung mit Rückfrage, hat jedoch den Nachteil, daß der Anrufer nach unter Umständen teurer Wartezeit wieder mit dem Vermittlungsplatz verbunden wird, da der Anschluß des gewünschten Teilnehmers belegt ist, oder der Anrufer keine Nachricht auf einem Anrufbeantworter des gewünschten Teilnehmers hinterlassen möchte.

Die Aufgabe der vorliegenden Erfindung ist somit, einen Vermittlungsplatz für eine Telekommunikationsanlage und ein in diesem Vermittlungsplatz angewendetes Verfahren bereitzustellen, durch welche eine effektivere Vermittlung eines ankommenden Anrufes an einen gewünschten Teilnehmer erzielt wird, so daß der ankommende Anruf in möglichst kurzer Zeit an den gewünschten Teilnehmer vermittelt wird.

Diese Aufgabe wird durch einen Vermittlungsplatz für eine Telekommunikationsanlage gemäß dem beigefügten Anspruch 1 und ein in dieser Telekommunikationsanlage angewendetes Verfahren zum Vermitteln von ankommenden Anrufen in einem Telekommunikationsnetz gemäß dem beigefügten Anspruch 7 gelöst.

Gemäß der vorliegenden Erfindung hat die Vermittlungsperson die Möglichkeit, durch Eingabe von Verbindungsdaten des gewünschten Teilnehmers den Telefonzustand dieses Teilnehmers abzufragen. Dabei wird zwischen den Telefonzuständen "Frei", "Besetzt" und "Anrufumleitung" unterschieden. Der Telefonzustand "Frei" bedeutet hierbei, daß der Anschluß des gewünschten Teilnehmers nicht besetzt und auch nicht umgeleitet ist.

Hat der gewünschte Teilnehmer einen anderen Telefonzustand als "Frei", so wird das der Vermittlungsperson, die den Vermittlungsplatz bedient, angezeigt. Der Telefonzustand "Anrufumleitung" (AUL) bedeutet dabei, daß der Teilnehmer seinen Anschluß beispielsweise auf einen Anrufbeantworter oder eine andere Rufnummer umgeleitet hat.

In Fällen, in denen der ermittelte Telefonzustand des gewünschten Teilnehmers bzw. dessen Anschluß "Frei" ist , wird der ankommende Anruf automatisch, gegebenenfalls nach Eingabe einer Bestätigung durch die Vermittlungsperson, an den gewünschten Teilnehmer weitervermittelt.

Der Vorteil der vorliegenden Erfindung besteht darin, daß der Vermittlungsplatz immer im Modus "Schnellvermittlung" arbeiten kann, wobei der ankommende Anruf nur dann weitervermittelt wird, wenn der Anschluß des gewünschten Teilnehmers frei und nicht umgeleitet ist. Auf diese Weise wird der Durchsatz des Vermittlungsplatzes optimiert und für den Anrufer entstehen keine unnötigen Wartezeiten. Weiterhin besteht nicht die Gefahr, daß der Anrufer auf einen belegten Anschluß oder einen Anrufbeantworter umgeleitet wird, wenn er dies nicht wünscht.

Ist der Telefonzustand des gewünschten Teilnehmers nicht "Frei", so kann die Vermittlungsperson dem - den Anruf initiierenden - Anrufer den Grund mitteilen, warum der Anrufer nicht weitervermittelt werden kann. So kann der Anrufer beim Telefonzustand "Anrufumleitung" beispielsweise entscheiden, ob er eine Nachricht für den gewünschten Teilnehmer hinterlassen möchte oder ob er mit einem anderen Teilnehmer verbunden werden möchte.

Vorteilhafte Ausgestaltungen der vorliegenden Erfindung sind in den jeweiligen Unteransprüchen wiedergegeben.

Die eingegebenen Verbindungsdaten können dabei der Name des gewünschten Teilnehmers sein, wobei anhand von gespeicherten Informationen automatisch der Anschluß des jeweiligen gewünschten Teilnehmers ermittelt wird. Für den ermittelten Anschluß wird anschließend automatisch der Telefonzustand ermittelt.

Weiterhin können die eingegebenen Verbindungsdaten aus der Durchwahl des gewünschten Teilnehmers innerhalb des - vorzugsweise privaten - Telekommunikationsnetzes bestehen. In diesem Fall kann der Zugriff auf die gespeicherten Informationen entfallen, da der Anschluß anhand der Durchwahl dem Vermittlungsplatz direkt bekannt ist.

Weiterhin ist es denkbar, daß von dem Vermittlungsplatz ein alternativer Teilnehmer automatisch angezeigt wird, der beispielsweise in der gleichen Abteilung wie der gewünschte Teilnehmer arbeitet, so daß der ankommende Anruf bzw. der Anrufer zu diesem alternativen Teilnehmer weitergeleitet werden kann.

Vorteilhaft ist eine Unterscheidung beim Telefonzustand "Anrufumleitung" möglich, so daß der Vermittlungsperson angezeigt wird, ob der Anschluß des gewünschten Teilnehmers auf einen Anrufbeantworter oder einen weiteren Anschluß - beispielsweise ein Mobiltelefon - umgeleitet ist. Die Vermittlungsperson kann somit dem Anrufer genau mitteilen, wohin der Anruf umgeleitet wird. Der Anrufer kann daraufhin entscheiden, ob er trotzdem weitervermittelt werden möchte.

Zur weiteren Differenzierung erkennt der Vermittlungsplatz mittels der Zustandseinrichtung weiterhin die Telefonzustände "Außer Betrieb" und "Rufzustand". Der Telefonzustand "Außer Betrieb" signalisiert beispielsweise, daß eine bestimmte Rufnummer nicht mehr bzw. zur Zeit nicht gültig ist, da der gewünschte Teilnehmer beispielsweise umgezogen ist. Der Telefonzustand "Rufzustand" signalisiert, daß der gewünschte Teilnehmer entweder gerade angerufen wird oder der gewünschte Teilnehmer selbst versucht eine Verbindung aufzubauen, wobei die Gesprächsverbindung noch nicht hergestellt ist.

Die vorliegende Erfindung wird nachfolgend anhand eines bevorzugten Ausführungsbeispieles unter Bezug auf die beigefügten Zeichnungen näher erläutert.

Dabei zeigen:
- Fig. 1:: eine schematische Darstellung des erfindungsgemäßen Vermittlungsplatzes in einem Telekommunikationsnetz;
- Fig. 2:: eine detaillierte Darstellung des erfindungsgemäßen Vermittlungsplatzes;
- Fig. 3:: ein Ablaufdiagramm zur Veranschaulichung der beim Telefonzustand "Frei" ablaufenden wesentlichen Verfahrensschritte;
- Fig. 4:: ein Ablaufdiagramm zur Veranschaulichung der beim Telefonzustand "Besetzt" ablaufenden wesentlichen Verfahrensschritte; und
- Fig. 5:: ein Ablaufdiagramm zur Veranschaulichung der beim Telefonzustand "Anrufumleitung" ablaufenden wesentlichen Verfahrensschritte.

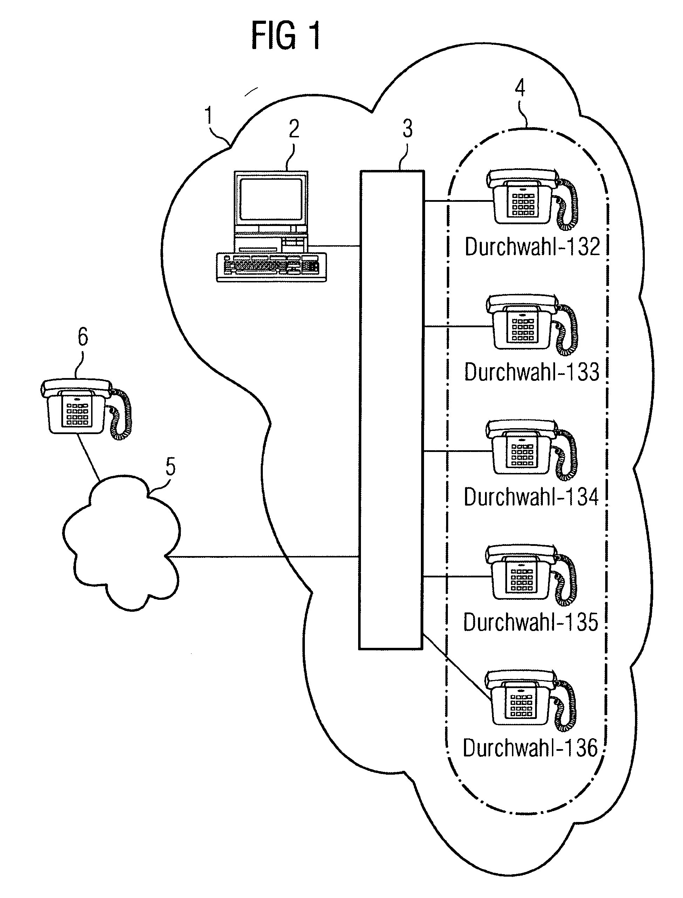

Fig. 1 zeigt eine schematische Darstellung des erfindungsgemäßen Vermittlungsplatzes 2 in einem - vorzugsweise privaten - Telekommunikationsnetz 1.

Das dargestellte Telekommunikationsnetz 1 besteht aus einem Vermittlungsplatz 2, einer Telekommunikationsanlage 3 - in der Literatur häufig auch als Nebenstellenanlage bezeichnet - und an der Telekommunikationsanlage 3 angeschlossenen - internen - Teilnehmern 4. Unter Teilnehmern werden hier zur besseren Verständlichkeit auch die den Teilnehmern zugeordneten Kommunikationsendgeräte verstanden, wobei jedem - internen - Teilnehmer 4 eine eigene Durchwahl zugeordnet ist. Im vorliegenden Ausführungsbeispiel sind dies die Durchwahl -132 bis zur Durchwahl -136.

Der Vermittlungsplatz 2 kann beispielsweise aus einem PC - kurz für 'Personal Computer' - bestehen, der über eine sogenannte CSTA-Schnittstelle (Computer Supported Telecommunication Applications) mit der Telekommunikationsanlage 3 verbunden ist. Eine notwendige Datenübertragung, beispielsweise Vermittlungsbefehle, zwischen der Telekommunikationsanlage 3 und dem Vermittlungsplatz 2 wird über diese Schnittstelle realisiert.

Zur Kommunikation der Vermittlungsperson mit einem Anrufer bzw. einem anderen Teilnehmern verfügt der Vermittlungsplatz über eine weitere - nicht dargestellte - Schnittstelle zur Verbindung mit der Telekommunikationsanlage 3, so daß die Vermittlungsperson beispielsweise über ein sogenanntes "Headset" mit den Teilnehmern kommunizieren kann. Der Vermittlungsplatz kann aber auch in Verbindung mit einem separaten Fernsprechapparat (Telefon) betrieben werden.

Auf diese Weise kann das beschriebene Verfahren PC-gestützt im Stand-Alone-Betrieb und in Kombination mit weiteren Anwendungen und Kommunikationsendgeräten als Vermittlungsplatz 2, optional mit Zugriff auf ein elektronisches Telefonbuch, betrieben werden.

Gemäß der vorliegenden Erfindung soll beispielsweise ein - externer - Teilnehmer 6 - im folgenden als Anrufer bezeichnet - mit einem - internen - Teilnehmer 4 verbunden werden. Dem - internen - Teilnehmer ist im vorliegenden Ausführungsbeispiel die Durchwahl -132 zugeordnet. Der Anruf des Anrufers 6 bildet dabei im gezeigten Ausführungsbeispiel aus Sicht des Vermittlungsplatzes 2 einen ankommenden Anruf aus einem öffentlichen Fernsprechnetz 5. Denkbar wäre auch ein Anruf von einem anderen - internen - Teilnehmer 4, der durch den Vermittlungsplatz 2 innerhalb des - vorzugsweise privaten - Telekommunikationsnetzes 1 weitervermittelt wird.

Gemäß der vorliegenden Erfindung vermittelt der Vermittlungsplatz 2 ankommende Anrufe vorteilhafterweise im beschriebenen Modus "Schnellvermittlung", d.h. der Anruf wird ohne Rückfrage zum gewünschten Teilnehmer 4 weitervermittelt, wenn der gerufene Anschluß den Telefonzustand "Frei" aufweist. Das erfindungsgemäße Verfahren kann aber auch beim Vermitteln nach Rücksprache angewendet werden.

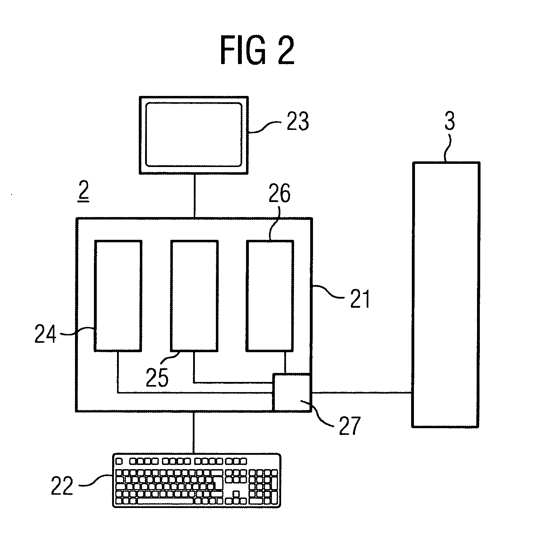

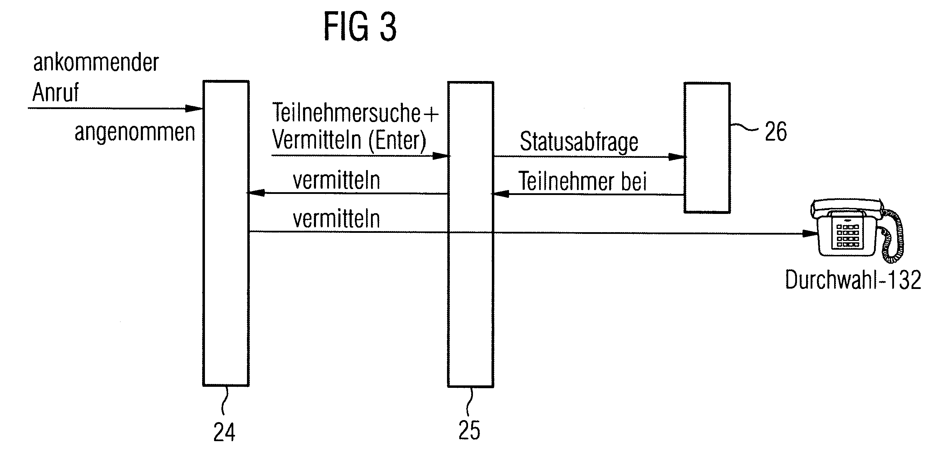

Die Funktionsweise des erfindungsgemäßen Vermittlungsplatzes 2 wird nachfolgend anhand von Fig. 2 und den Ablaufdiagrammen gemäß Fig. 3 bis 5 detailliert erläutert.

Wie in Fig. 2 zu sehen ist, besteht der Vermittlungsplatz 2 aus einem PC 21 mit einer angeschlossenen Eingabevorrichtung 22 (z.B. einer Tastatur und einer Maus) und einer angeschlossenen Ausgabevorrichtung 23 (z.B. einem Monitor). Der PC 21 beinhaltet eine Vermittlungseinrichtung 24, eine Datenzugriffseinrichtung 25 und eine Zustandseinrichtung 26. Weiterhin ist an dem PC 21 ein - nicht dargestelltes - Headset angeschlossen, das zur Kommunikation der Vermittlungsperson mit Teilnehmern (dem Anrufer 6 bzw. dem gewünschten Teilnehmer 4) dient.

Die Kommunikation des PCs 21 mit der Telekommunikationsanlage 3, z.B. zum Übertragen von Vermittlungsbefehlen, erfolgt über eine Schnittstelle 27, beispielsweise nach dem CSTA-Standard.

Ein ankommender Anruf eines Anrufers wird von der Vermittlungseinrichtung 24 registriert und unter anderem durch die Ausgabevorrichtung 23 angezeigt. Die Vermittlungsperson gibt über die Eingabevorrichtung 22 den Namen (allgemein als Verbindungsdaten bezeichnet) des gewünschten Teilnehmers 4 ein. Diese Eingabe wird zur Suche des gewünschten Teilnehmers 4 von der Vermittlungseinrichtung 24 an die Datenzugriffseinrichtung 25 übergeben. Die Datenzugriffseinrichtung 25 sucht aus einer - nicht dargestellten - Datenbank den Anschluß des gewünschten Teilnehmers 4 (der im vorliegenden Ausführungsbeispiel die Durchwahl -132 aufweist) heraus und übergibt die ermittelte Durchwahl an die Zustandseinrichtung 26.

Die Datenbank, in der die Informationen über die Teilnehmer des Telekommunikationsnetzes 1 gespeichert sind, kann sich dabei beispielsweise lokal gespeichert auf dem Vermittlungsplatz 2 oder zentral gespeichert auf der Telekommunikationsanlage 3 befinden. Bei dieser Datenbank handelt es sich beispielsweise um ein elektronisches Telefonbuch.

Die Zustandseinrichtung 26 ermittelt nach Übergabe der Durchwahl den Telefonzustand des gewünschten Teilnehmers 4. Die Zustandseinrichtung 26 kann dabei mindestens die Telefonzustände "Frei", "Besetzt" und "Anrufumleitung" erkennen. Weiterhin ist beim Telefonzustand "Anrufumleitung" eine Unterscheidung möglich, die zwischen einer Anrufumleitung auf einen Anrufbeantworter oder auf eine andere Rufnummer - beispielsweise eines Mobiltelefons - unterscheidet.

Fig. 3 zeigt ein Ablaufdiagramm zur Veranschaulichung der beim Telefonzustand "Frei" des gewünschten Teilnehmers 4 (im vorliegenden Ausführungsbeispiel mit der Durchwahl -132) ablaufenden wesentlichen Verfahrensschritte.

Nach Ermitteln des Telefonzustandes durch die Zustandseinrichtung 26 wird der ermittelte Telefonzustand, gegebenenfalls über die Datenzugriffseinrichtung 25, an die Vermittlungseinrichtung 24 gesendet. Beim Telefonzustand "Frei" vermittelt die Vermittlungseinrichtung 24 den ankommenden Anruf automatisch, gegebenenfalls nach Eingabe einer Bestätigung durch die Vermittlungsperson, an den gewünschten Teilnehmer 4.

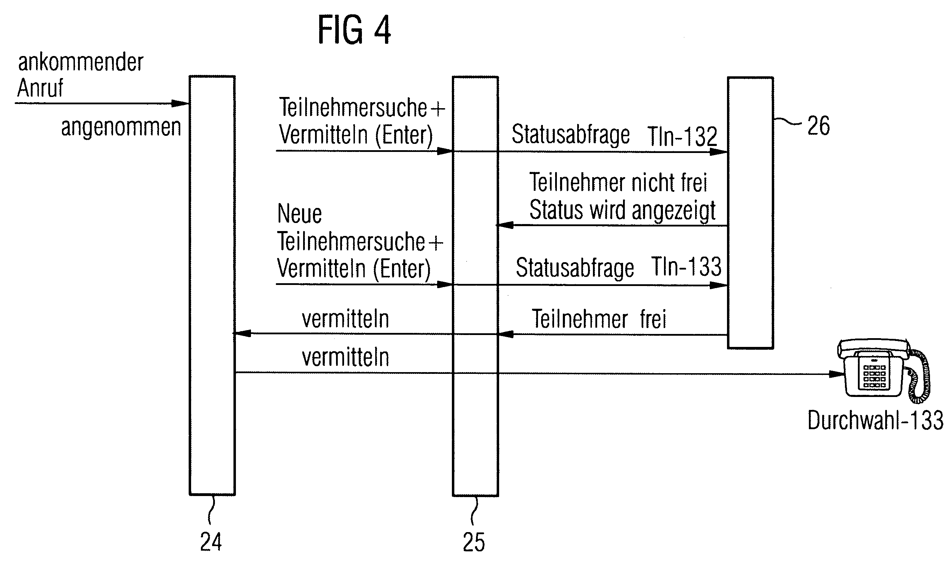

Fig. 4 zeigt ein Ablaufdiagramm zur Veranschaulichung der beim Telefonzustand "Besetzt" ablaufenden wesentlichen Verfahrensschritte.

Wird durch die Zustandseinrichtung 26 der Telefonzustand "Besetzt" des gewünschten Teilnehmers 4 ermittelt, so wird dieser Telefonzustand an die Datenzugriffseinrichtung 25 übermittelt. Die Datenzugriffseinrichtung 25 gibt daraufhin eine Meldung auf der Ausgabevorrichtung 23 aus, die signalisiert, daß der Anschluß des gewünschten Teilnehmers 4 aktuell besetzt ist.

Die Vermittlungsperson kann daraufhin beispielsweise durch Eingabe eines anderen Namens eine neue Teilnehmersuche anregen. Dieser neue Teilnehmer weist beispielsweise die Durchwahl -133 auf. Alternativ besteht auch die Möglichkeit, daß durch die Datenzugriffseinrichtung 25 ein oder mehrere alternative Teilnehmer zum gewünschten Teilnehmer 4 ausgegeben werden.

Ist der Zustand des - neuen - gewünschten "Frei", so wird der ankommende Anruf, wie beschrieben, automatisch an den neuen Teilnehmer - im vorliegenden Ausführungsbeispiel an die Durchwahl -133 - weitervermittelt.

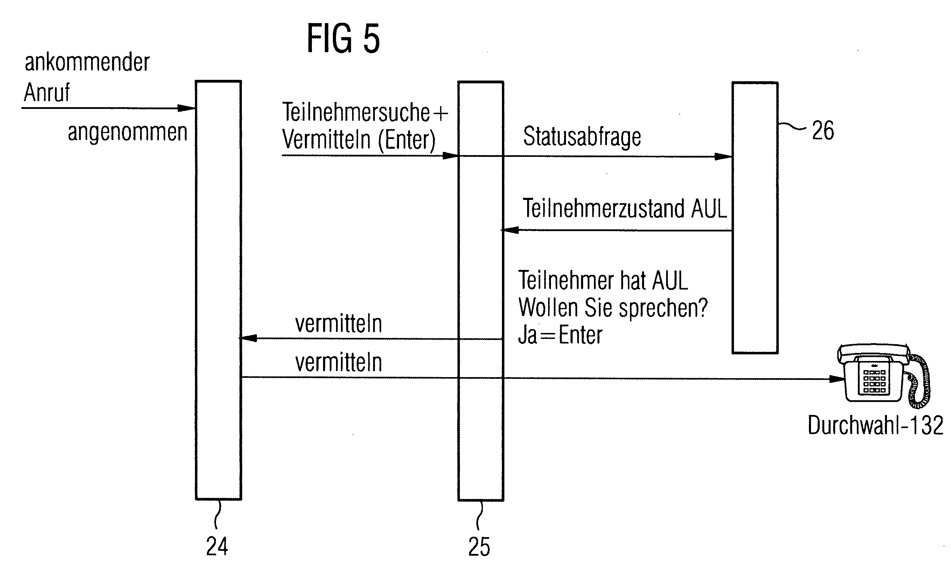

Fig. 5 zeigt ein Ablaufdiagramm zur Veranschaulichung der beim Telefonzustand "Anrufumleitung" ablaufenden wesentlichen Verfahrensschritte.

Beim Telefonzustand "Anrufumleitung" (AUL) wird dieser Zustand ebenfalls von der Zustandseinrichtung 26 an die Datenzugriffseinrichtung 25 übermittelt und auf der Ausgabevorrichtung 23 angezeigt. Der Anschluß des gewünschten Teilnehmers 4 kann dabei beispielsweise auf einen Anrufbeantworter oder eine Rufnummer umgeleitet sein.

Die Vermittlungsperson hat nun die Möglichkeit, nach Rückfrage beim Anrufer 6, den Anruf weiterzuvermitteln, damit der Anrufer 6 gegebenenfalls eine Nachricht für den gewünschten Teilnehmer 4 auf dessen Anrufbeantworter hinterlassen kann. Weiterhin kann die Vermittlungsperson nach einem alternativen Gesprächspartner suchen oder das Gespräch wird auf Wunsch des Anrufers 6 beendet.

Auf diese Weise wird das Kommunikationsverhalten und der Durchsatz verbessert, da der jeweilige Anrufer 6 schnell weitervermittelt werden kann, ohne daß die Gefahr besteht, daß der Anrufer 6 auf einen besetzten Anschluß oder auf einen Anrufbeantworter, auf dem der Anrufer 6 vielleicht keine Nachricht hinterlassen möchte, weitervermittelt wird.

Nachfolgend wird ein Beispiel für eine Teilnehmersuche mittels der Datenzugriffseinrichtung 25 beschrieben, bei dem die Durchwahl des gewünschten Teilnehmers 4 anhand der Eingabe seines Namens erfolgt.

Hierbei kommt ein an der Telekommunikationsanlage 3 eingehender Anruf zur Vermittlung, wobei die Vermittlungsperson den Anruf annimmt. Die Vermittlungsperson sucht nun mittels der Datenzugriffseinrichtung 25 in der - nicht dargestellten - Datenbank nach dem gewünschtem Teilnehmer 4 bzw. seiner Durchwahl. Die Datenzugriffseinrichtung 25 verfügt z.B. über einen Suchalgorithmus, bei dem mit jeder Buchstabeneingabe sofort dieser Buchstabe gesucht wird und immer der erste Teilnehmer mit der Buchstabenkombination angezeigt, d.h. selektiert, wird. Dieser Suchalgorithmus hat den Vorteil, daß der jeweilige Name sehr schnell gefunden wird.

In Kombination mit der Zustandseinrichtung 26 sendet nun die Datenzugriffseinrichtung 25 bei jeder Eingabe an der Eingabevorrichtung 22 den gefundenen Eintrag (Rufnummer) zur Zustandseinrichtung 26. Die Zustandseinrichtung 26 entscheidet nun anhand der Zeitabstände zwischen zwei Eingaben, ob ein Teilnehmer gefunden ist und eine Anzeige des Zustands (bspw. "Frei", "Belegt", "Anrufumleitung", "Außer Betrieb" oder "Rufzustand") erfolgen soll.

### Das Szenario würde beispielsweise folgendermaßen aussehen:

Suche nach "Metzger Reinhard", dabei bedeutet "E" Eingabe über die Eingabevorrichtung 22 und "A" steht für Ausgabe über die Ausgabevorrichtung 23:
- E:: M
- A:: Erster Name mit Buchstabe M
- E:: E
- A:: Erster Name mit ME
- E:: T
- A:: Erster Name mit MET
- E:: Z
- A:: METZGER ADOLF
- E:: Cursor um eines nach unter
- A:: METZGER REINHARD

Sobald der richtige Name gefunden wurde, wird entweder durch Eingabe einer Bestätigung oder nach Ablauf einer bestimmten Zeitspanne, in der keine Eingabe erfolgt (z.B. zwei Sekunden) ist, der Telefonzustand des gewünschten Teilnehmers 4 angezeigt und der Anrufer 6 wird ggf. weitervermittelt.

## Patentansprüche

1. Vermittlungsplatz (2) für eine Telekommunikationsanlage (3) zum Vermitteln von ankommenden Anrufen an Teilnehmer (4) eines Telekommunikationsnetzes (1), wobei der Vermittlungsplatz (2) durch eine Vermittlungsperson bedienbar ist,
- mit einer Eingabeeinrichtung (22) zum Eingeben von einem gewünschten Teilnehmer (4) zugeordneten Verbindungsdaten,
- mit einer Zustandseinrichtung (26) zum automatischen Ermitteln und Erkennen des Telefonzustandes des gewünschten Teilnehmers (4), wobei die Zustandseinrichtung (26) mindestens zwischen den Telefonzuständen "Frei", "Belegt" und "Anrufumleitung" unterscheidet, und
- mit einer Vermittlungseinrichtung (24), die den ankommenden Anruf automatisch an den gewünschten Teilnehmer (4) vermittelt, wenn der ermittelte Telefonzustand "Frei" ist, wobei bei den Telefonzuständen "Besetzt" und "Anrufumleitung" eine entsprechende Meldung durch eine Ausgabevorrichtung (23) angezeigt wird.

2. Vermittlungsplatz (2) gemäß Anspruch 1,
**gekennzeichnet durch**
eine Datenzugriffseinrichtung (25), die aus den Verbindungsdaten, die zumindest aus dem Namen des gewünschten Teilnehmers (4) bestehen, anhand von abgespeicherten Informationen die Durchwahl des gewünschten Teilnehmers (4) ermittelt und diese an die Zustandseinrichtung (26) zum Ermitteln des Telefonzustandes des gewünschten Teilnehmers (4) sendet.

3. Vermittlungsplatz (2) gemäß Anspruch 1,
**dadurch gekennzeichnet,**
**daß** die Verbindungsdaten aus der Durchwahl des gewünschten Teilnehmers (4) bestehen.

4. Vermittlungsplatz (2) gemäß Anspruch 1, 2 oder 3,
**dadurch gekennzeichnet,**
**daß** die Datenzugriffseinrichtung (25) bei den Telefonzuständen "Besetzt" und "Anrufumleitung" einen alternativen Teilnehmer (4) durch die Ausgabevorrichtung (23) anzeigt.

5. Vermittlungsplatz (2) gemäß einem der Ansprüche 1 bis 4,
**dadurch gekennzeichnet,**
**daß** die Zustandseinrichtung (26) bei dem Telefonzustand "Anrufumleitung" unterscheidet, ob der jeweilige Anschluß des gewünschten Teilnehmers (4) auf einen Anrufbeantworter oder eine Rufnummer umgeleitet wird.

6. Vermittlungsplatz (2) gemäß einem der Ansprüche 1 bis 5,
**dadurch gekennzeichnet,**
**daß** die Zustandseinrichtung (26) weiterhin Telefonzustände "Außer Betrieb" und "Rufzustand" erkennt.

7. Verfahren zum Vermitteln von ankommenden Anrufen an Teilnehmer (4) eines Telekommunikationsnetzes (1), mit den Schritten:
- Eingeben von Verbindungsdaten eines gewünschten Teilnehmers (4) durch eine Vermittlungsperson, wobei an den gewünschten Teilnehmer (4) ein ankommender Anruf vermittelt werden soll,
- automatisches Ermitteln und Erkennen des Telefonzustandes des gewünschten Teilnehmers (4), wobei mindestens zwischen den Telefonzuständen "Frei", "Belegt" und "Anrufumleitung" unterschieden wird, und
- automatisches Vermitteln des ankommenden Anrufes an den gewünschten Teilnehmer (4), wenn der ermittelte Telefonzustand "Frei" ist, wobei bei den Telefonzuständen "Besetzt" und "Anrufumleitung" eine entsprechende Meldung angezeigt wird.

8. Verfahren gemäß Anspruch 7,
**dadurch gekennzeichnet,**
**daß** die Verbindungsdaten aus dem Namen des gewünschten Teilnehmers (4) bestehen,
- wobei aus dem Namen anhand von gespeicherten Informationen die Durchwahl des gewünschten Teilnehmers (4) ermittelt wird, und
- wobei anhand der Durchwahl der Telefonzustand des gewünschten Teilnehmers (4) ermittelt wird.

9. Verfahren gemäß Anspruch 7,
**dadurch gekennzeichnet,**
**daß** die Verbindungsdaten aus der Durchwahl des gewünschten Teilnehmers (4) bestehen.

10. Verfahren gemäß Anspruch 7, 8 oder 9,
**dadurch gekennzeichnet,**
**daß** beim Telefonzustand "Besetzt" und "Anrufumleitung" ein alternativer Teilnehmer (4) angezeigt wird.

11. Verfahren gemäß einem der Ansprüche 7 bis 10,
**dadurch gekennzeichnet,**
**daß** beim Telefonzustand "Anrufumleitung" unterschieden wird, ob der Anschluß des gewünschten Teilnehmers (4) auf einen Anrufbeantworter oder eine Rufnummer umgeleitet ist.

12. Verfahren gemäß einem der Ansprüche 7 bis 11,
**dadurch gekennzeichnet,**
**daß** weiterhin Telefonzustände "Außer Betrieb" und "Rufzustand" erkannt werden.

## Claims

1. Switchboard (2) for a telecommunication system (3) for switching incoming calls to subscribers (4) of a telecommunication network (1), wherein the switchboard (2) can be operated by a switchboard operator,
- comprising an input device (22) for entering connection data assigned to a desired subscriber (4),
- comprising a state device (26) for automatically determining and recognizing the telephone state of the desired subscriber (4), the state device (26) distinguishing at least between the telephone states "free", "busy" and "call diversion", and
- comprising a switching device (24) which automatically switches the incoming call to the desired subscriber (4) if the determined telephone state is "free", an appropriate message being displayed by an output device (23) in the case of the telephone states "busy" and "call diversion".

2. Switchboard (2) according to claim 1, **characterized by** a data access device (25) which determines, from the connection data which consist at least of the name of the desired subscriber (4) and on the basis of stored information, the extension number of the desired subscriber (4) and transmits this to the state device (26) in order to determine the telephone state of the desired subscriber (4).

3. Switchboard (2) according to claim 1, **characterized in that** the connection data consist of the extension number of the desired subscriber (4).

4. Switchboard (2) according to claim 1, 2 or 3, **characterized in that**, in the case of the telephone states "busy" and "call diversion", the data access device (25) displays an alternative subscriber (4) via the output device (23).

5. Switchboard (2) according to one of claims 1 to 4, **characterized in that**, in the case of the telephone state "call diversion", the state device (26) distinguishes whether the respective connection of the desired subscriber (4) is being diverted to an answering machine or a telephone number.

6. Switchboard (2) according to one of claims 1 to 5, **characterized in that** the state device (26) furthermore recognizes the telephone states "out of service" and "ringing state".

7. Method for switching incoming calls to subscribers (4) of a telecommunication network (1), comprising the steps:
- entering of connection data of a desired subscriber (4) by a switchboard operator, the intention being to switch an incoming call to the desired subscriber (4);
- automatic determination and recognition of the telephone state of the desired subscriber (4), a distinction being made at least between the telephone states "free", "busy" and "call diversion"; and
- automatic switching of the incoming call to the desired subscriber (4) if the determined telephone state is "free", an appropriate message being displayed in the case of the telephone states "busy" and "call diversion".

8. Method according to claim 7, **characterized in that** the connection data consist of the name of the desired subscriber (4),
- the extension number of the desired subscriber (4) being determined from the name on the basis of stored information, and
- the telephone state of the desired subscriber (4) being determined on the basis of the extension number.

9. Method according to claim 7, **characterized in that** the connection data consist of the extension number of the desired subscriber (4).

10. Method according to claim 7, 8 or 9, **characterized in that** an alternative subscriber (4) is displayed in the case of the telephone state "busy" and "call diversion".

11. Method according to one of claims 7 to 10, **characterized in that**, in the case of the telephone state "call diversion", it is distinguished whether the connection of the desired subscriber (4) is being diverted to an answering machine or a telephone number.

12. Method according to one of claims 7 to 11, **characterized in that** the telephone states "out of service" and "ringing state" are also recognized.

## Revendications

1. Poste de commutateur (2) pour une installation de télécommunication (3) pour commuter des appels entrants vers des abonnés (4) d'un réseau de télécommunication (1), le poste de commutateur (2) pouvant être servi par un opérateur de commutation,
- ayant un dispositif d'entrée (22) permettant d'entrer des données de liaison affectées à un abonné souhaité (4),
- ayant un dispositif d'état (26) permettant de déterminer et détecter automatiquement l'état du téléphone de l'abonné souhaité (4), le dispositif d'état (26) faisant au moins la différence entre les états de téléphone « libre », « occupé » et «renvoi d'appel », et
- ayant un dispositif de commutation (24) qui commute l'appel entrant automatiquement à l'abonné souhaité (4) lorsque l'état de téléphone déterminé est « libre », avec les états de téléphone « occupé » et « renvoi d'appel » un message correspondant étant affiché par un dispositif de sortie (23).

2. Poste de commutateur (2) selon la revendication 1, **caractérisé en ce qu'**un dispositif d'accès à des données (25) qui, à partir des données de liaison qui se composent au moins du nom de l'abonné souhaité (4), détermine le numéro d'accès direct de l'abonné souhaité (4) à l'aide des informations enregistrées et l'envoie au dispositif d'état (26) afin de déterminer l'état du téléphone de l'abonné souhaité (4).

3. Poste de commutateur (2) selon la revendication 1, **caractérisé en ce que** les données de liaison sont composées du numéro d'accès direct de l'abonné souhaité (4).

4. Poste de commutateur (2) selon la revendication 1, 2 ou 3, **caractérisé en ce que**, avec les états de téléphone « occupé » et « renvoi d'appel », le dispositif d'accès à des données (25) affiche un autre abonné (4) par le biais du dispositif de sortie (23).

5. Poste de commutateur (2) selon l'une quelconque des revendications 1 à 4,
**caractérisé en ce que**, en cas de l'état de téléphone « renvoi d'appel », le dispositif d'état (26) différencie si le branchement actuel de l'abonné souhaité (4) est renvoyé vers un répondeur automatique ou vers un numéro d'appel.

6. Poste de commutateur (2) selon l'une quelconque des revendications 1 à 5, **caractérisé en ce que** le dispositif d'état (26) détecte en outre des états de téléphone « hors service » et « état d'appel ».

7. Procédé de commutation d'appels entrants vers des abonnés (4) d'un réseau de télécommunication (1), comportant les étapes consistant à :
- entrer des données de liaison d'un abonné souhaité (4) par un opérateur de commutation, un appel entrant devant être commuté vers l'abonné souhaité (4),
- déterminer et détecter automatiquement l'état du téléphone de l'abonné souhaité (4), une différence étant faite au moins entre les états de téléphone « libre », « occupé » et « renvoi d'appel », et
- commuter automatiquement l'appel entrant vers l'abonné souhaité (4) lorsque l'état de téléphone déterminé est « libre », en cas d'états de téléphone « occupé » et « renvoi d'appel », un message correspond étant affiché.

8. Procédé selon la revendication 7, **caractérisé en ce que** les données de liaison se composent du nom de l'abonné souhaité (4),
- le numéro d'accès direct de l'abonné souhaité (4) étant déterminé à partir du nom à l'aide des informations enregistrées, et
- l'état du téléphone de l'abonné souhaité (4) étant déterminé à l'aide du numéro d'accès direct.

9. Procédé selon la revendication 7, **caractérisé en ce que** les données de liaison sont composées du numéro d'accès direct de l'abonné souhaité (4).

10. Procédé selon la revendication 7, 8 ou 9, **caractérisé en ce que**, avec l'état de téléphone « occupé » et « renvoi d'appel », un autre abonné (4) est affiché.

11. Procédé selon l'une quelconque des revendications 7 à 10, **caractérisé en ce que**, avec l'état de téléphone « renvoi d'appel », on différencie si le branchement de l'abonné souhaité (4) est renvoyé vers un répondeur automatique ou vers un numéro d'appel.

12. Procédé selon l'une quelconque des revendications 7 à 11, **caractérisé en ce que** les états de téléphone « hors service » et « état d'appel » sont également détectés.
